# EUROPEAN PATENT SPECIFICATION

(11) **EP 3 752 356 B1**
(45) Date of publication and mention of the grant of the patent: **09.06.2021**
(21) Application number: 18779700.6
(22) Date of filing: 05.10.2018
(51) Int. Cl.: B32B 7/12, B32B 27/08, B32B 27/16, B32B 27/32, B32B 27/36

(54) **MULTI-LAYER PACKAGING FILM**
MEHRLAGIGE VERPACKUNGSFOLIE
FILM D'EMBALLAGE MULTICOUCHES

(30) Priority: 15.02.2018 EP 18156993
(43) Date of publication of application: 23.12.2020
(73) Proprietor: Unilever PLC, London Greater London EC4Y 0DY (GB); Unilever IP Holdings B.V., 3013 AL Rotterdam (NL)
(72) Inventor: TANYER, Muzaffer, 34768 Umraniye Istanbul (TR); KARCI, Cüneyt, 34149 Yesilköy-Istanbul (TR); ENGIN, Ayse, 34149 Yesilköy-Istanbul (TR); SANCAR, Ümit, 45030 Yunusemre/Manisa (TR); URUSAK, Onur, 45030 Yunusemre/Manisa (TR); ÖZGÜNAY, Atahan, 34768 Umraniye Istanbul (TR)
(74) Representative: Keenan, Robert Daniel
(86) International application number: PCT/EP2018/077103
(87) International publication number: WO 2019/158231

(56) References cited:
- EP-A1- 0 524 572
- EP-A1- 0 797 504
- WO-A2-2009/082133
- JP-A- H0 459 353
- FRIEDRICH J F ET AL: "Improvement in polymer adhesivity by low and normal pressure plasma surface modification", SURFACE AND COATINGS TECHNOLOGY, ELSEVIER BV, AMSTERDAM, NL, vol. 59, no. 1-3, 1 October 1993 (1993-10-01), pages 371-378, XP025823816, ISSN: 0257-8972, DOI: 10.1016/0257-8972(93)90115-5 [retrieved on 1993-10-01]

## Description

### Field of the Invention

The present invention relates to packaging films. More particularly to multi-layer films suitable for packaging particulate products such as leaf tea.

### Background of the Invention

Multi-layer packaging films find wide application in packaging a range of products. Lamination of different materials into a single film allows for making use of each individual material's properties at appropriate parts of the final package. For example a material used in an outer layer could be easily printable, whilst an inner layer can have properties more suitable for contact with the product, such as for example non-stick properties.

EP 0 524 572 A1 (MITSUBISHI CHEMICAL CORP) discloses a stretched, laminated film comprising at least an outer layer, an intermediate layer and an inner layer, said outer layer and inner layer comprising a polypropylenes composition composed of 100 parts by weight of polypropylenes (A), 2 to 30 parts by weight of polybutene and/or polyisobutylene (B) and 0.2 to 5 parts by weight of a polyglycerin fatty acid ester (C), and said intermediate layer comprising polyesters (D).

WO 98/32603 A1 (TETRA LAVAL HOLDINGS AND FINANCE) discloses packaging laminate intended for the production of packaging containers possessing superior release properties vis-a-vis solid or semi-solid food products such as, for example, various types of cheese.

EP0797504 B1 relates to the field of composite polymer films of reduced surface frictional characteristics and to a method of making such films. It more particularly refers to a biaxially oriented composite film structure having improved properties, including heat sealability, good machinability and reduced coefficient of friction.

The present inventors have recognized that certain challenges present themselves when using conventional multi-layer films for packaging particulate material such as leaf tea. In particular the particulate material can tend to stick to the inner layer of the film such that not all of the particulate material can be dispensed from the package.

The present inventors have found that by providing a multi-layer film with a specific inner, outer and intermediate layer, improved packages for particulate material can be provided.

### Summary of the Invention

In a first aspect, the present invention is directed to a multi-layer packaging film comprising:
- an inner layer comprising polypropylene and an anti-static agent;
- an outer layer comprising polypropylene and an anti-static agent; and
- an intermediate layer comprising polyethylene terephthalate or polypropylene and having an outer face facing the outer layer and an inner face facing the inner layer; wherein the intermediate layer is corona-treated on both the inner and outer faces and neither the inner nor outer layer is corona-treated.

Provision of such a film allows for effective manufacture of packaging for particulate material with improved properties in terms of the tendency of material to stick to the inner layer and which is capable of being deployed and/or stored in a configuration (such as a roll) wherein the inner and outer layers are in contact.

Without wishing to be bound by theory, the present inventors believe that the anti-static agent in the inner layer reduces the surface tension of the inner layer and enables the inner layer to repel even fine particles of particulate material such as tea dust.

Furthermore the present inventors have found that corona-treatment of both faces of the intermediate layer allows for good lamination with the other layers and has been found not to interfere with the antistatic properties (unlike, for example, corona-treatment of the inner and/or outer layers).

Thus in a second aspect the present invention is directed to a packaged particulate product comprising a cavity delimited by a wall, wherein the wall comprises a film according to any embodiment of the first aspect and the cavity contains a particulate material.

In a further aspect the present invention is directed to a process for producing a packaging film according to any embodiment of the first aspect, wherein the process comprises the steps of:
(i) providing a first packaging sheet material comprising polypropylene and an anti-static agent;
(ii) providing a second packaging sheet material comprising polypropylene and an anti-static agent;
(iii) providing a third packaging sheet material comprising polyethylene terephthalate or polypropylene and having an inner and an outer face;
(iv) corona-treating both the inner and the outer face of the third material; and
(v) laminating the first material on the inner face of the third material and the second material on the outer face of the third material.

### Detailed Description

The multi-layer packaging film of the present invention has at least three layers:
- an inner layer comprising polypropylene and an anti-static agent;
- an outer layer comprising polypropylene and an anti-static agent; and
- an intermediate layer comprising polyethylene terephthalate or polypropylene and having an outer face facing the outer layer and an inner face facing the inner layer and wherein the intermediate layer is corona-treated on both the inner and outer faces.

Suitable anti-static agents for use in the present invention include, for example, glyceryl esters of fatty acids, tertiary amines, fatty-acid amides, hydroxyl fatty-acid amides, alkali metal sulfonates, polyether-modified polydiorganosiloxanes, polyalkylphenylsiloxanes, and mixtures thereof. Especially preferred are glyceryl esters of C₁₀-C₄₀ fatty acids, most preferably the anti-static agent comprises or is glyceryl mono stearate (GMS). In one embodiment the anti-static agent comprises a mixture of glyceryl mono stearate and diethanolamine.

The inner layer preferably comprises the anti-static agent in an amount of from 0.01 to 2% by weight of the layer, more preferably from 0.1 to 1.5% and most preferably from 0.4 to 1.0%.

As packaging films are often stored and deployed onto packaging machines in the form of a roll, migration of the anti-static agent from the inner to the outer layer can often be encountered. To ameliorate this problem the outer layer of the film of the present invention also comprises an anti-static agent. Preferably the anti-static agent in the outer layer is substantially the same as the anti-static agent in the inner layer. More preferably the anti-static agent in the outer layer is substantially the same and the amount of anti-static agent in both the inner and outer layers is substantially the same. By "substantially the same is meant that the ratio of the amount (% w/w) of the anti-static agent in the inner layer to the amount (% w/w) of the anti-static agent in the outer layer is in the range 2:1 to 1:2, more preferably 1.5:1 to 1:1.5 and most preferably 1.2:1 to 1:1.2.

The polypropylene of the inner layer is preferably cast polypropylene (CPP) as this allows for the inner layer to have good heat-sealing and "peelable" properties which are convenient for allowing packages made from the film to be easy to open.

The inner layer preferably comprises slip agent to improve reliability during high-speed package manufacture. The slip agent should be of a high molecular weight such that it is non-migratory to the outer layer and also does not interfere with the properties of the anti-static agent. Preferably the slip agent is selected from high molecular weight silicone, poly(methyl methacrylate) and mixtures thereof. By "high molecular weight is meant" a weight-average molecular weight of at least 100,000 g/mol, more preferably at least 200,000 g mol and most preferably from 500,000 to 5,000,000 g/mol. The PMMA preferably is in the form of particles with a weight-average diameter of from 2 to 16 micron, more preferably 4 to 10 micron.

The inner layer preferably has a thickness of from 10 to 100 microns, more preferably from 20 to 60 microns and most preferably 30 to 40 microns.

In a preferred embodiment the packaging film is in the form of a roll, wherein the film is arranged with the inner layer in contact with the outer layer

The polypropylene of the outer layer is preferably oriented polypropylene (OPP) as this allows for good transparency and printing properties as well as desired heat-sealing properties during packaging manufacture.

The outer layer preferably has a thickness of from 5 to 50 microns, more preferably from 10 to 40 microns and most preferably 20 to 30 microns.

The intermediate layer comprises polyethylene terephthalate (PET) or polypropylene. The intermediate layer adds durability and strength to the film. Where polypropylene is used, oriented polypropylene is preferred, more preferred is bi-oriented polypropylene (BOPP).

The intermediate layer is corona-treated on both faces. Corona treatment is well known in the art and in conventional lamination processes, the surfaces of the various layer materials are usually corona-treated to allow better adherence during lamination.

The present inventors have found that corona-treatment of the inner and/or outer layer can adversely affect the surface properties of the final film and reduce the efficacy of the antistatic agent. On the other hand corona-treatment of both faces of the intermediate layer allows for good lamination with the other layers and has been found not to interfere with the antistatic properties. Therefore in a preferred embodiment neither of the inner nor outer layer is corona-treated.

To improve the barrier properties of the film it is preferred that at least one of the inner and outer faces of the intermediate layers is metallized (for example with a thin coating of aluminium). Preferably one face is metallized and the other is not metallized.

Whilst any suitable corona treatment may be used on the intermediate layer, where one of the faces is metallized it is preferred that said face is chemically corona-treated. On the other hand where a face is not metallized it is preferred that the face is electrically corona-treated.

The thickness of the intermediate layer (including any metallized coating) is preferably from 2 to 30 microns, more preferably 5 to 20 microns and most preferably 8 to 15 microns.

Typically there will be a first adhesive layer between the intermediate layer and the inner layer and a second adhesive layer between the intermediate layer and the outer layer.

The film may be made by any convenient process but is preferably made by a process comprising the steps of:
(i) providing a first packaging sheet material comprising polypropylene and an anti-static agent;
(ii) providing a second packaging sheet material comprising polypropylene and an anti-static agent;
(iii) providing a third packaging sheet material comprising polyethylene terephthalate or polypropylene and having an inner and an outer face;
(iv) corona-treating both the inner and the outer face of the third material; and
(v) laminating the first material on the inner face of the third material and the second material on the outer face of the third material.

The first packaging material forms the inner layer, the second the outer layer and the third the intermediate layer.

Lamination can be achieved in step (iii) without corona-treating either of the outer and inner layers. Thus in a preferred embodiment the process does not comprise corona-treating the inner layer and does not comprise corona-treating the outer layer.

The first and second materials are preferably laminated to the third material with adhesive. More preferably the first material is laminated to the third material with solvent-free adhesive and the second material is laminated to the third layer with solvent-based adhesive.

The film of the present invention is preferably used to form a package for particulate material. More preferably regions of the outer layer are heat-sealed together to form the package. Heat-sealing may also involve sealing regions of the outer layer and the inner layer together and/or regions of the inner-layer together.

The package comprises a cavity delimited by a wall, wherein the wall comprises the film and the cavity contains a particulate material. Preferably the wall comprises the film oriented with at least part of the inner layer facing the cavity.

The particulate material could be any powder or granular substance. Preferably however, the particulate material is beverage precursor material such as coffee powder or coffee granules but most preferably tea powder or leaf tea.

### Examples

### Example 1

A packaging film was manufactured with the following structure:
*Outer layer -* Heat-sealable OPP containing about 0.7 wt% GMS. Thickness of 25 micron.
*Intermediate layer* - PET metallized on the outer face. Chemically-corona treated on the metallized face and electrically-corona treated on the other face. Thickness of 12 micron. Inner layer - Peelable CPP containing about 0.7 wt% GMS and from 200-30,000 ppm non-migratory slip agent (mixture of polydimethyl floksan and PMMA). Thickness of 40 microns.

Lamination of the inner and intermediate layers was achieved through a thin layer of adhesive without solvent whereas lamination of the outer and the intermediate layers was achieved with adhesive with solvent. Excellent lamination was achieved even though neither the outer nor inner layer were corona-treated.

The film was heat-sealed into a pouch and dosed with leaf tea. The resulting packaged product showed excellent in-use properties and, in particular did not demonstrate any adhesion of tea dust to the inside of the package.

### Example 2

A packaging film was manufactured with the following structure:
*Outer layer* - Heat-sealable BOPP containing 0.5 to 0.8 wt% GMS. Thickness of 25 micron.
*Intermediate layer -* BOPP metallized on the outer face. Chemically-corona treated on the metallized face and electrically-corona treated on the other face. Thickness of 20 micron.
*Inner layer -* Peelable BOPP containing about 0.5-0.8 wt% GMS. Thickness of 40 microns.

Lamination of the inner and intermediate layers was achieved through a thin layer of adhesive without solvent whereas lamination of the outer and the intermediate layers was achieved with adhesive with solvent. Excellent lamination was achieved even though neither the outer nor inner layer were corona-treated.

The film was heat-sealed into a pouch and dosed with leaf tea. The resulting packaged product showed excellent in-use properties and, in particular did not demonstrate any adhesion of tea dust to the inside of the package.

Although the invention has been described with reference to specific embodiments, various modifications of the described modes for carrying out the invention which are apparent to those skilled in the relevant fields are intended to be within the scope of the following claims.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention (for example a packaging film of the invention), such disclosure is also to be considered to apply to any other aspect of the invention (for example a process of the invention) *mutatis mutandis.*

## Claims

1. A multi-layer packaging film comprising:
- an inner layer comprising polypropylene and an anti-static agent;
- an outer layer comprising polypropylene and an anti-static agent; and
- an intermediate layer comprising polyethylene terephthalate or polypropylene and having an outer face facing the outer layer and an inner face facing the inner layer;
wherein the intermediate layer is corona-treated on both the inner and outer faces and neither the inner nor outer layer is corona-treated.

2. The packaging film as claimed in claim 1 wherein one of the inner and outer faces of the intermediate layers is metallized.

3. The packaging film as claimed in claim 2 wherein the corona treatment of the one of the inner and outer faces which is metallized is chemical corona treatment.

4. The packaging film as claimed in claim 2 or claim 3 wherein the corona treatment of the other of the inner and outer faces of the intermediate layers which is not metallized is electrical corona treatment.

5. The packaging film as claimed in any one of the preceding claims wherein the anti-static agent is selected from glyceryl esters of fatty acids, tertiary amines, fatty-acid amides, hydroxyl fatty-acid amides, alkali metal sulfonates, polyether-modified polydiorganosiloxanes, polyalkylphenylsiloxanes, and mixtures thereof.

6. The packaging film as claimed in claim 5 wherein the anti-static agent comprises glyceryl esters of C₁₀-C₄₀ fatty acids.

7. The packaging film as claimed in claim 6 wherein the anti-static agent comprises glyceryl mono stearate.

8. The packaging film as claimed in any one of claims 1 to 7 wherein both the inner and outer layers each comprise the anti-static agent in an amount of from 0.01 to 2% by weight of the layer.

9. The packaging film as claimed in any one of the preceding claims wherein the polypropylene of the inner layer is cast polypropylene (CPP).

10. The packaging film as claimed in any one of the preceding claims wherein the polypropylene of the outer layer is oriented polypropylene (OPP).

11. The packaging film as claimed in any one of the preceding claims wherein the inner layer comprises a non-migratory slip agent selected from high molecular weight silicone, poly(methyl methacrylate) and mixtures thereof.

12. A packaged particulate product comprising a cavity delimited by a wall, wherein the wall comprises a film as claimed in any one of the preceding claims and the cavity contains a particulate material.

13. The packaged product as claimed in claim 12 wherein the wall comprises the film oriented with at least part of the inner layer facing the cavity.

14. The packaged product as claimed in claim 12 or claim 13 wherein the particulate material is beverage precursor material, preferably leaf tea.

15. A process for producing the packaging film as claimed in any one of claims 1 to 10, wherein the process comprises the steps of:
(i) providing a first packaging sheet material comprising polypropylene and an anti-static agent;
(ii) providing a second packaging sheet material comprising polypropylene and an anti-static agent;
(iii) providing a third packaging sheet material comprising polyethylene terephthalate or polypropylene and having an inner and an outer face;
(iv) corona-treating both the inner and the outer face of the third material; and
(v) laminating the first material on the inner face of the third material and the second material on the outer face of the third material;
wherein the process does not comprise corona-treating the inner layer and does not comprise corona-treating the outer layer.

## Patentansprüche

1. Mehrschichtige Verpackungsfolie, umfassend:
- eine innere Schicht, umfassend Polypropylen und ein antistatisches Mittel;
- eine äußere Schicht, umfassend Polypropylen und ein antistatisches Mittel; und
- eine Zwischenschicht, umfassend Polyethylenterephthalat oder Polypropylen und mit einer der äußeren Schicht zugewandten Außenfläche und einer der inneren Schicht zugewandten Innenfläche;
wobei die Zwischenschicht sowohl auf der Innenfläche als auch auf der Außenfläche coronabehandelt ist und weder die innere noch die äußere Schicht coronabehandelt ist.

2. Verpackungsfolie wie in Anspruch 1 beansprucht, wobei eine von der Innen- und Außenfläche der Zwischenschichten metallisiert ist.

3. Verpackungsfolie wie in Anspruch 2 beansprucht, wobei die Coronabehandlung der einen von der Innen- und Außenfläche, die metallisiert ist, eine chemische Coronabehandlung ist.

4. Verpackungsfolie wie in Anspruch 2 oder Anspruch 3 beansprucht, wobei die Coronabehandlung der anderen von der Innen- und Außenfläche der Zwischenschichten, die nicht metallisiert ist, eine elektrische Coronabehandlung ist.

5. Verpackungsfolie wie in irgendeinem der vorhergehenden Ansprüche beansprucht, wobei das antistatische Mittel ausgewählt ist aus Glycerylestern von Fettsäuren, tertiären Aminen, Fettsäureamiden, Hydroxylfettsäureamiden, Alkalimetallsulfonaten, Polyether-modifizierten Polydiorganosiloxanen, Polyalkylphenylsiloxanen und Mischungen davon.

6. Verpackungsfolie wie in Anspruch 5 beansprucht, wobei das antistatische Mittel Glycerylester von C₁₀-C₄₀-Fettsäuren umfasst.

7. Verpackungsfolie wie in Anspruch 6 beansprucht, wobei das antistatische Mittel Glycerylmonostearat umfasst.

8. Verpackungsfolie wie in irgendeinem der Ansprüche 1 bis 7 beansprucht, wobei sowohl die innere als auch die äußere Schicht jeweils das antistatische Mittel in einer Menge von 0,01 bis 2 Gew.-% der Schicht umfassen.

9. Verpackungsfolie wie in irgendeinem der vorhergehenden Ansprüche beansprucht, wobei das Polypropylen der inneren Schicht ungerecktes Polypropylen (CPP) ist.

10. Verpackungsfolie wie in irgendeinem der vorhergehenden Ansprüche beansprucht, wobei das Polypropylen der äußeren Schicht orientiertes Polypropylen (OPP) ist.

11. Verpackungsfolie wie in irgendeinem der vorhergehenden Ansprüche beansprucht, wobei die innere Schicht ein nicht migrierendes Gleitmittel umfasst, das ausgewählt ist aus hochmolekularem Silicon, Poly(methylmethacrylat) und Mischungenn davon.

12. Verpacktes teilchenförmiges Produkt, umfassend einen durch eine Wand begrenzten Hohlraum, wobei die Wand einen Folie wie in irgendeinem der vorhergehenden Ansprüche beansprucht umfasst, und der Hohlraum ein teilchenförmiges Material enthält.

13. Verpacktes Produkt wie in Anspruch 12 beansprucht, wobei die Wand die Folie umfasst, die so ausgerichtet ist, dass mindestens ein Teil der inneren Schicht dem Hohlraum zugewandt ist.

14. Verpacktes Produkt wie in Anspruch 12 oder Anspruch 13 beansprucht, wobei das teilchenförmige Material ein Vorstufenmaterial eines Getränks ist, bevorzugt Blatt-Tee.

15. Verfahren zur Herstellung der Verpackungsfolie wie in irgendeinem der Ansprüche 1 bis 10 beansprucht, wobei das Verfahren die folgenden Schritte umfasst:
(i) Bereitstellen eines ersten Verpackungsbahnmaterials, das Polypropylen und ein antistatisches Mittel umfasst;
(ii) Bereitstellen eines zweiten Verpackungsbahnmaterials, das Polypropylen und ein antistatisches Mittel umfasst;
(iii) Bereitstellen eines dritten Verpackungsbahnmaterials, das Polyethylenterephthalat oder Polypropylen umfasst und eine Innen- und eine Außenfläche aufweist;
(iv) Coronabehandlung sowohl der Innen- als auch der Außenfläche des dritten Materials; und
(v) Laminieren des ersten Materials auf die Innenfläche des dritten Materials und des zweites Materials auf die Außenfläche des dritten Materials,
wobei das Verfahren nicht die Coronabehandlung der inneren Schicht umfasst und nicht die Coronabehandlung der äußeren Schicht umfasst.

## Revendications

1. Film d'emballage multicouche comprenant :
- une couche interne comprenant du polypropylène et un agent anti-statique ;
- une couche externe comprenant du polypropylène et un agent anti-statique ; et
- une couche intermédiaire comprenant du poly(éthylène téréphtalate) ou polypropylène et ayant une face externe faisant face à la couche externe et une face interne faisant face à la couche interne ;
dans lequel la couche intermédiaire est traitée par effet corona sur les deux des faces interne et externe et ni la couche interne ni externe n'est traitée par effet corona.

2. Film d'emballage selon la revendication 1, dans lequel une des faces interne et externe des couches intermédiaires est métallisée.

3. Film d'emballage selon la revendication 2, dans lequel le traitement par effet corona de la une des faces interne et externe qui est métallisée est un traitement par effet corona chimique.

4. Film d'emballage selon la revendication 2 ou revendication 3, dans lequel le traitement par effet corona de l'autre des faces interne et externe des couches intermédiaires qui n'est pas métallisée est un traitement par effet corona électrique.

5. Film d'emballage selon l'une quelconque des revendications précédentes, dans lequel l'agent antistatique est choisi parmi des esters glycéryliques d'acides gras, des aminés tertiaires, des aminés d'acides gras, des amides d'hydroxyle acides gras, des sulfonates de métaux alcalins, des polydiorganosiloxanes modifiés par un polyéther, des polyalkylphénylsiloxanes, et des mélanges de ceux-ci.

6. Film d'emballage selon la revendication 5, dans lequel l'agent antistatique comprend des esters glycéryliques d'acides gras en C₁₀-C₄₀.

7. Film d'emballage selon la revendication 6, dans lequel l'agent antistatique comprend du monostéarate de glycéryle.

8. Film d'emballage selon l'une quelconque des revendications 1 à 7, dans lequel les deux des couches interne et externe comprennent chacune l'agent antistatique dans une quantité de 0,01 à 2 % en masse de la couche.

9. Film d'emballage selon l'une quelconque des revendications précédentes, dans lequel le polypropylène de la couche interne est du polypropylène coulé (CPP).

10. Film d'emballage selon l'une quelconque des revendications précédentes, dans lequel le polypropylène de la couche externe est du polypropylène orienté (OPP).

11. Film d'emballage selon l'une quelconque des revendications précédentes, dans lequel la couche interne comprend un agent de glissement non-migratoire choisi parmi du silicone de masse moléculaire élevée, poly(méthacrylate de méthyle) et mélanges de ceux-ci.

12. Produit particulaire emballé comprenant une cavité délimitée par une paroi, dans lequel la paroi comprend un film selon l'une quelconque des revendications précédentes et la cavité contient un matériau particulaire.

13. Produit emballé selon la revendication 12, dans lequel la paroi comprend le film orienté avec au moins une partie de la couche interne faisant face à la cavité.

14. Produit emballé selon la revendication 12 ou revendication 13, dans lequel le matériau particulaire est un matériau de précurseur de boisson, de préférence du thé en feuilles.

15. Procédé pour la production du film d'emballage selon l'une quelconque des revendications 1 à 10, dans lequel le procédé comprend les étapes de :
(i) fourniture d'un premier matériau de feuille d'emballage comprenant du polypropylène et un agent antistatique ;
(ii) fourniture d'un second matériau de feuille d'emballage comprenant du polypropylène et un agent antistatique ;
(iii) fourniture d'un troisième matériau de feuille d'emballage comprenant du poly(éthylène téréphtalate) ou polypropylène et ayant une face interne et une externe ;
(iv) traitement par effet corona des deux de la face interne et l'externe du troisième matériau ; et
(v) stratification du premier matériau sur la face interne du troisième matériau et du second matériau sur la face externe du troisième matériau ;
dans lequel le procédé ne comprend pas de traitement par effet corona de la couche interne et ne comprend pas de traitement par effet corona de la couche externe.
